Europäisches Patentamt

European Patent Office

Office européen des brevets

(19)

(11) Publication number: **0 259 523**
**A1**

# (12) EUROPEAN PATENT APPLICATION

(21) Application number: **86201566.6**

(22) Date of filing: **11.09.86**

(51) Int. Cl.⁴: **G01G 19/02 , G01G 19/03 , G01G 19/42 , G01G 3/13**

(43) Date of publication of application:
**16.03.88 Bulletin 88/11**

(84) Designated Contracting States:
**AT BE CH DE FR GB IT LI LU NL SE**

(71) Applicant: **Philips S.p.A.**
**Piazza IV Novembre, 3 P.O. Box 3992**
**I-20124 Milano(IT)**

(72) Inventor: **Filippini, Paolo**
**Via Guardi, 50**
**I-20092 Cinisello Balsamo(IT)**

(74) Representative: **Mittler, Enrico et al**
**c/o Marchi & Mittler s.r.l. Viale Lombardia, 20**
**I-20131 Milano(IT)**

(54) **Apparatus for dynamic statistical weighing of vehicles and/or for counting the axles of trucks or lorries.**

(57) An apparatus for the dynamic statistical weighing of vehicles which with slight modifications in form is capable of operating also as an apparatus for counting the axles of trucks or lorries.

Said apparatus comprises essentially a piezo-electric sensor (2, 14, 30) in the form of a rod of adequate length arranged longitudinally between two layers of elastomer material (3, 4; 12, 13; 28, 29) the lower (4, 13, 29) of which is designed to rest on a concrete slab or other suitable rigid material.

The top elastomer layer (3, 12, 28) is covered at the two visible faces with one or more leaf springs side by side (5, 11, 32).

Fig.1

## "Apparatus for dynamic statistical weighing of vehicles and/or for counting the axles of trucks or lorries"

The present invention relates to an apparatus for dynamic statistical weighing of vehicles and/or the counting of the axles of trucks or lorries.

As is known, for statistical purposes knowledge of the total weight of vehicles which pass over a given road in a given period of time is of considerable interest.

Such surveying is carried out at present by means of platform-scale devices with which cooperate load cells the signals of which are appropriately processed.

Said platform-scale devices are however of very complex construction and therefore easily subject to failure and wear with the resulting necessity of frequent overhaul and maintenance. This is the cause of periodic traffic obstructions with serious damage to the regularity and fluidity of said traffic.

Said platform-scale devices also have lengthy reaction times which make them incapable of correctly determining the weight of vehicles transiting at speeds above a given limit.

In view of this state of the art, the principal object of the present invention is to accomplish an apparatus of simple construction and high reliability for dynamic statistical weighing of vehicles.

Another object of the present invention is to accomplish an apparatus for dynamic statistical weighing of vehicles which would operate correctly regardless of the speed at which the vehicles transit.

Another object of the present invention is to accomplish an apparatus for dynamic statistical weighing of vehicles which could also operate, possibly with appropriate modifications, as an apparatus for counting the axles of trucks or lorries.

These and other objects of the present invention are achieved by means of an apparatus characterized in that it comprises an piezoelectric sensor in the form of a road arranged transversely to the direction of travel of the vehicle between two superimposed layers of rubbery material of which the lower is made to rest on the ground and the upper is covered with at least one metal leaf spring designed to receive the weight of the vehicle.

This is an extremely simple apparatus hence of great reliability and capable of supplying fast and accurate measurements of the weight of vehicles. It should be noted in particular that the lower rubbery layer isolates the piezoelectric sensor from the vibrations of the road surface thus avoiding spurious and erroneous signals when the vehicle approaches while the upper rubbery layer prevents violent impacts of vehicles on the piezolectric sensor and distributes pressure uniformly over said sensor to make the generated signal clean. The leaf spring makes the pressure exerted uniform and hence the signal obtained clear and clean.

It should also be noted that, due to the manner in which it is made, the apparatus in accordance with the invention lends itself perfectly also to counting the axles of trucks or lorries.

Preferably, the top layer of rubbery material (e.g. a suitabale elastomer) is covered not with a single leaf spring but with a plurality of leaf springs laid side by side in the direction of development of the piezoelectric sensor. In this manner each tyre of the transiting vehicle will contact and hence bend only one and at most two leaf springs with the result that the apparatus is free from high mechanical moments which could endanger the accuracy of measurement.

Preferably, the bottom layer of rubbery material rests on an underlying metal beam which is fixed to the ground. Said metal beam has the advantageous effect of isolating the apparatus from the road surface making it substantially insensitive to vibrations created by arriving vehicles. The bottom rubbery layer does the rest as already mentioned.

These and other characteristics of the present invention will be made clear by the following description given with reference to the annexed drawings wherein:

FIG. 1 shows a diagramatic cross section of an apparatus in accordance with the invention inserted in the road surface for dynamic statistical weighing of vehicles,

FIG. 2 shows a perspective view of said apparatus,

FIG. 3 shows a schematic side view of a modified version of the apparatus according to the invention used for counting the axles of trucks or lorries,

FIG. 4 shows a perspective view of the apparatus of FIG. 2,

FIG. 5 shows a more detailed perspective view of a preferred practical embodiment of the apparatus of FIG. 3, and

FIG. 6 shows a cross section along line VI-VI of FIG. 5 of the apparatus of FIG. 5 applied to a road surface.

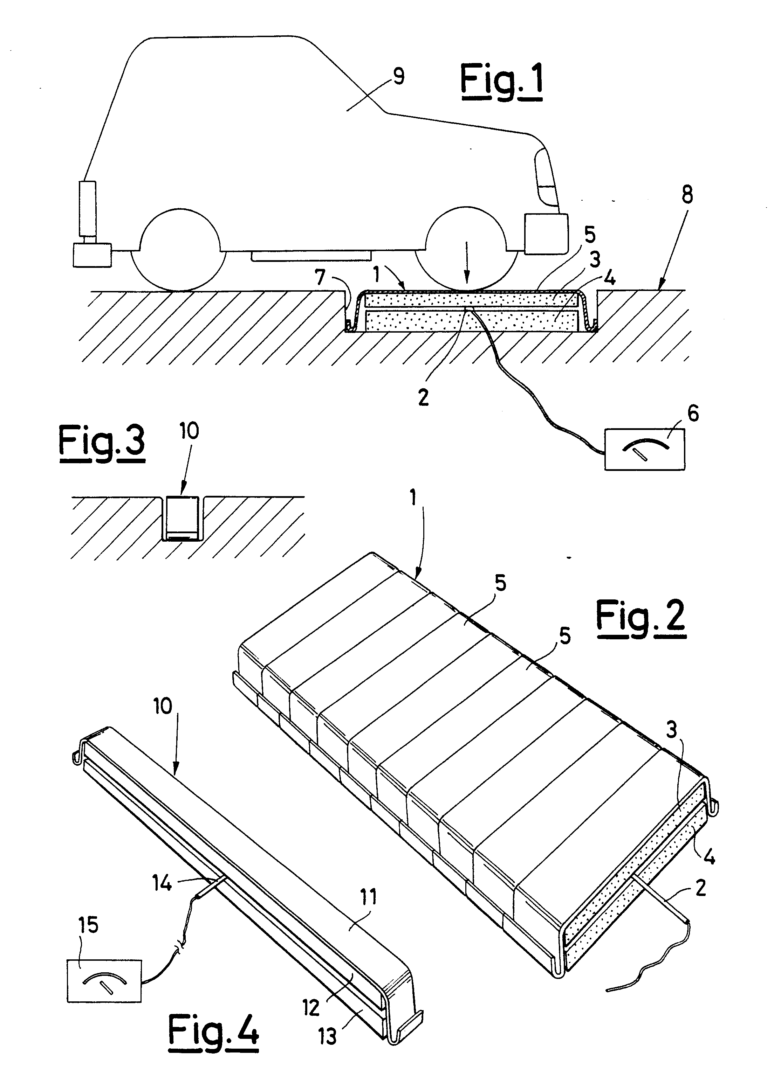

In FIGS. 1 and 2 there is schematically illustrated an apparatus in accordance with the invention for the dynamic statistical weighing of vehicles which is indicated as a whole with reference number 1.

Said apparatus comprises a piezoelectric sensor 2 made in the shape of a round bar of adequate length. Said sensor (e.g. of the type found in trade under the name "Vibrocoax" produced by the Thermocoax Company) is inserted between two layers 3 and 4 of rubbery material such as a suitable elastomer.

Said double layer 3 and 4 is covered on the top and sides with a plurality of metal leaf springs 5 made in appropriate width and placed side by side transversely to the direction of development of the piezoelectric sensor 2.

The piezoelectric sensor2 is connected to an appropriate data processor 6 illustrated - schematically in FIG. 1.

The appratus 1 is designed to be arranged in a cavity 7 created in the road surface 8 transversely to the direction of travel of the vehicles 9.

It follows that a vehicle 9 passing over the apparatus 1 exerts with each of its front and rear tyres a pressure on one or at most two of the leaf springs 5, thus coantacting a limited section of the piezoelectric sensor 2 the signal of which is sent to the data processor 6.

This prevents the application of undesired mechanical moments and at the same time concentrates and makes uniform the applied pressure. This circumstance together with the fact that the piezoelectric sensor 2 is installed between two elastic layers 3 and 4 which absorb shocks and vibrations respectively causes the output signal to have high modulation linearity which eliminates practically all possibility of doubtful interpret ation during processing.

In addition the response is virtually instantaneous and zeroing time of the signal is nearly zero so that it is possible to correctly record the weight of vehicles which transit even at very high speeds.

The structure described is also usable in the form illustrated for counting the axles of trucks or lorries.

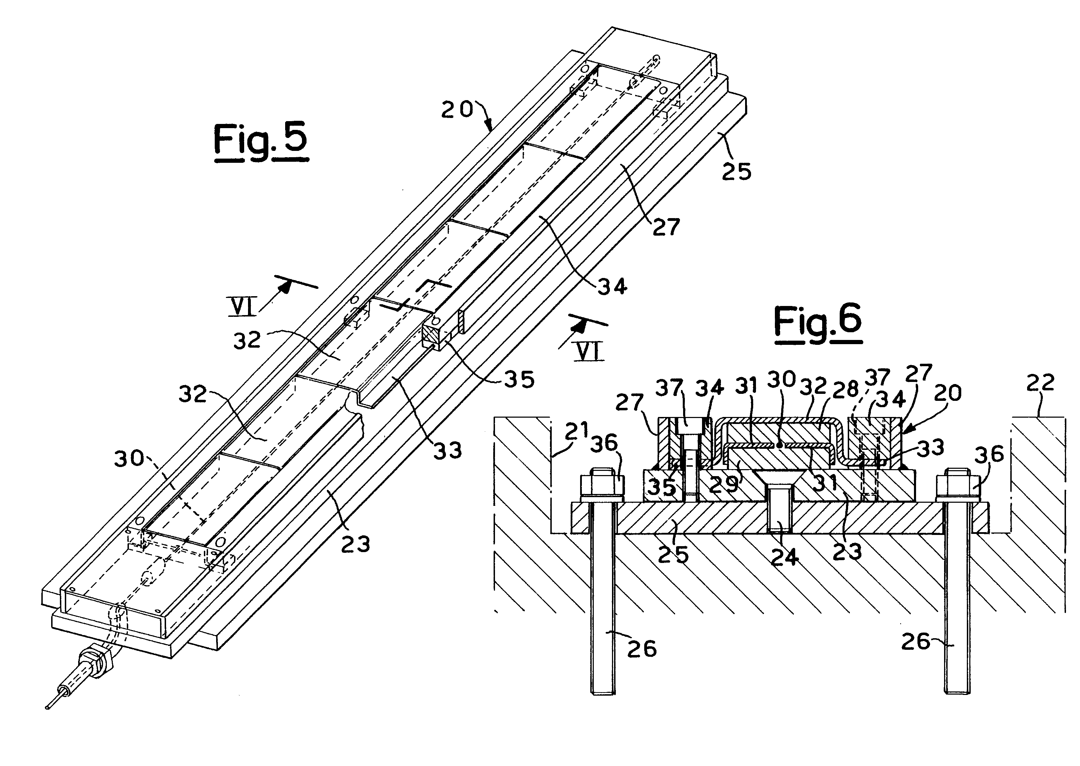

For the abovementioned use the apparatus 10 as shown in FIGS. 3 and 4 comprising a single leaf spring 11 of reduced width which develops along the piezoelectric sensor 9 over the two layers of elastomer 12 and 13 between which is inserted a piezoelectric sensor 14 connected electrically to a data processor 15 can be employed alternatively.

A more specific embodiment of the apparatus of FIGS. 1 and 2 is shown as an example in FIGS. 5 and 6 where said apparatus is indicated as a whole with reference number 20 and is shown housed in a cavity 21 created in the road surface 22.

The apparatus 20 comprises a metal beam 23 which is fixed with a screw 24 to a base plate 25 which is fixed by means of threaded rods 26 and nuts 36 to the bottom of the cavity 21 (FIG. 6). To the beam 23 is welded a pair of upright walls 27 which together with the beam 23 function as a container and as an insulator against vibrations from the road surface.

Above the metal beam 23 are arranged two layers of elastomer 28 and 29 between which is installed a piezoelectric sensor 30 together with two metal leaves 31 the purpose of which is to free the apparatus 20 from variations due to the type of tyre of the vehicle.

Over and around the two layers of elastomer 28 and 29 is arranged a plurality of metal leaf springs 32 having edges 33 fixed to the underlying beam 23 by means of screws 37 which pass through rigid strips 34 and elastic nogs 35 (FIGS. 5 and 6).

## Claims

1. Apparatus for the dynamic statistical weighing of vehicles and/or for counting the axles of trucks or lorries characterized in that it comprises a piezoelectric sensor (2, 14, 30) in the form of a rod arranged transversely to the direction of travel of vehicles between two overlying layers of rubber material (3, 4; 12, 13; 28, 29) of which the lower (4, 13, 29) is made to rest on the ground and the upper (3, 12, 28) is covered with at least one metal leaf spring (5, 11, 32) designed to receive the weight of the vehicle.

2. Apparatus in accordance with claim 1 characterized in that said top layer of rubbery material (3, 28) is covered with a plurality of leaf springs (5, 32) side by side in the direction of development of the piezoelectric sensor (2, 30).

3. Apparatus in accordance with claim 1 characterized in that said top layer of rubbery material (12) is covered with a single leaf spring (11) developing along the piezoelectric sensor (14).

4. Apparatus in accordance with claim 1 characterized in that said lower layer of rubbery material (29) is supported on an undrlying metal beam (23) fixed to the ground.

5. Apparatus in accordance with claim 1 characterized in that said layers of rubbery material (3, 4; 12, 13; 28, 29) are elastomer.

Fig.1

Fig.3

Fig.2

Fig.4

Fig.5

Fig.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 311 928 (L.PIETZSCH) * Claims 1,5-8 * | 1,3-5 | G 01 G 19/02 G 01 G 19/03 G 01 G 19/42 G 01 G 3/13 |
| X | FR-A-2 567 550 (SOCIETE ELECTRONIQUE CONTROLE MESURE) * Claims 1,2,5,6; page 1, lines 18-23 * | 1,3-5 | |
| A | DE-A-2 043 484 (ETAT FRANCAIS) * Claims 1,4 * | 1 | |

TECHNICAL FIELDS
SEARCHED (Int. Cl.4)

G 01 G

The present search report has been drawn up for all claims

| Place of search | Date of completion of the search | Examiner |
|---|---|---|
| THE HAGUE | 18-05-1987 | VITZTHUM N.A. |